# EUROPEAN PATENT SPECIFICATION

(11) **EP 0 322 600 B1**
(45) Date of publication and mention of the grant of the patent: **16.03.1994**
(21) Application number: 88120351.7
(22) Date of filing: 06.12.1988
(51) Int. Cl.: G21C 3/32

(54) **Gage and method for determining bulge orientation at a bulge joint between a grid sleeve and a guide thimble of a nuclear fuel assembly**
Lehre und Verfahren zur Bestimmung der Wulstrichtung an einer Wulstdrückverbindung zwischen einer Gitterhülse und einem Führungsrohr eines Kernbrennstabbündels
Jauge et méthode pour déterminer l'orientation d'un emboutissage d'un joint fait par emboutissage en une douille d'une grille et un tube-guide d'un assemblage de combustible nucléaire

(30) Priority: 24.12.1987 US 137621
(43) Date of publication of application: 05.07.1989
(73) Proprietor: WESTINGHOUSE ELECTRIC CORPORATION, Pittsburgh Pennsylvania 15222 (US)
(72) Inventor: Widener, Wade Hampton, Cayce, SC 29033 (US)
(74) Representative: Gallo, Wolfgang, Dipl.-Ing. (FH)

(56) References cited:
- EP-A- 0 182 149
- GB-A- 1 108 235

## Description

The present invention relates generally to fuel assemblies for use in nuclear reactors and, more particularly, to a gage and a method for determining the orientation of bulges connecting grid sleeves with guide thimbles in fuel assemblies.

A typical pressurized water nuclear reactor contains a large number of fuel assemblies in its core. Basically, each fuel assembly comprises a bottom nozzle, a top nozzle, an instrumentation tube, guide thimbles, fuel rods, and grids. The guide thimbles extend vertically between the bottom and top nozzles and rigidly connect them to each other. The grids are attached to the guide thimbles in axially spaced positions therealong such that a multiplicity of cells defined by interleaved straps of the respective grids are vertically aligned with one another. The fuel rods are supported, in an organized and transversely spaced array, in the vertically aligned cells of the transverse grids by means of springs and dimples disposed on the straps and projecting therefrom into the cells.

The grids have short sleeves which extend above and below the interleaved straps for receiving therethrough the guide thimbles and providing means for attaching the grids thereto. Typically, concentric portions of the guide thimbles and grid sleeves are deformed or bulged together, such as by plastic expansion, to form therebetween mechanical expansion joints above and below the respective grids. In assembling the fuel assembly, the grids are attached to the guide thimbles, beginning near the lower ends of the latter and proceeding toward the upper ends thereof. When subsequently the fuel rods are loaded through the grids, each guide thimble is surrounded by four fuel rods. Since the guide thimbles are typically larger in diameter than the fuel rods, the space between each guide thimble and the fuel rods adjacent thereto is less than that between adjacent fuel rods. Due to this narrower space between each guide thimble and the adjacent fuel rods, there is also less coolant flowing along those sides of the fuel rods which are facing the guide thimble and, therefore, less heat transfer from the fuel rods to the flowing coolant. This condition is termed a hot channel factor which creates a departure from nucleate boiling (DNB) condition.

When joining the coaxially interfit grid sleeves and guide thimble together by forming external bulges thereon, it is important not to aggravate this DNB condition by further reducing the gap between the fuel rods and the guide thimble. Thus, it is most desirable to form each set of four bulges at 45-, 135-, 225- and 315-degree positions (hereinafter referred to as 45-degree reference points) about the guide thimble relative to placement of the fuel rods at 0-, 90-, 180- and 270-degree positions (hereinafter referred to as X-Y axes reference points) about the guide thimble. Accepted standards allow a maximum deviation from the 45-degree reference points of +/- 11 degrees at one bulge location, and +/- 6 degrees at the rest of the bulge locations.

The conventional process used to produce the expansion joints at each grid location involves forming each set of bulges at the same orientation from one grid to the next, so that quality-control personnel need to inspect only the expansion joints at the uppermost grid to determine whether the sets of bulges are located within the allowed range of deviation from the desired 45-degree reference points. Heretofore, such inspection for verifying expansion joint orientation has been performed through the application of visual standards, one major drawback of which method is that it is too dependent upon the subjective judgment of the personnel carrying it out.

The invention has for its principal object to provide a new approach to bulge-orientation determination, one which will yield more objective and positive results with minimal reliance upon the skill of the particular inspector.

The invention, from one aspect thereof, accordingly resides in a gage for inspecting a nuclear fuel assembly to determine the actual orientation of a plurality of outwardly projecting bulges formed on, and mated to form a joint between, a hollow grid sleeve and a tubular guide thimble extending therethrough, characterized by the combination comprising (a) a tubular member which is insertable into the guide thimble and has a resiliently expandable portion with outwardly projecting embossments disposed thereon and spaced from each other circumferentially thereabout, said embossments being spaced apart the same as the bulges on said guide thimble and having a configuration enabling engagement thereof into concavities defined by the bulges of the guide thimble on the inside thereof; (b) an elongate expansion member extending through said tubular member and axially movable relative thereto between a first position and a second position, said expansion member, upon movement thereof from said first position to said second position, effecting resilient expansion of said expandable portion of the tubular member and consequential displacement of said embossments toward engagement with said concavities, and, upon movement from said second position to said first position, enabling contraction of said expandable portion and consequential displacement of the embossments away from said concavities; (c) means for rotating said tubular member about its longitudinal axis so as to align the embossments thereon with said concavities for engagement therewith, said embossments, when engaged in said concavities, preventing further rotation of the tubular member; and (d) an indicator mechanism responsive to rotation of said tubular member for indicating the extent and direction of said rotation away from a reference position, and thereby indicating the actual orientation of the mated bulges.

Preferably, the resiliently expandable portion of the tubular member comprises resiliently deflectable fingers each having one of the embossments disposed thereon; and the expansion member comprises an elongate shaft which extends through the tubular member and rotatably supports it, and which shaft has a tapered expansion mandrel extending from one end thereof, and has a handle or finger piece extending from its opposite end.

The indicator mechanism preferably comprises an indicator base which is connected to the tubular member for rotation together therewith, and an elongate pointer element which is pivotally supported from the indicator base in a manner such as to function in plumb-bob fashion to define the aforesaid reference position when the indicator base is in a substantially upright disposition, the indicator base including a scale for indicating, in conjunction with the pointer element, the extent and direction of angular deviation of the indicator base from said reference position due to rotational movement thereof together with the tubular member.

The invention, from another aspect thereof, resides in a method of utilizing the aforesaid gage for inspecting a nuclear fuel assembly to determine the actual orientation of a plurality of outwardly projecting bulges formed on, and mated to form a joint between, a hollow grid sleeve and a tubular guide thimble therethrough, characterized by the following steps sequentially performed: (a) inserting said tubular member, with the expansion member therein disposed in said first position, into said guide thimble to an extent placing said embossments into alignment with said joint; (b) urging said elongate expansion member toward said second position while, simultaneously therewith, rotating the tubular member until said embossments engage in the concavities defined by the bulges of the guide thimble on the inside thereof; and (c) taking from said indicator mechanism a reading to determine the orientation of the mated bulges.

A preferred embodiment of the invention will now be described, by way of example only, with reference to the accompanying drawings, in which:
Fig. 1 is an elevational view, partly in section, of a fuel assembly having expansion or bulge joints between its guide thimbles and grid sleeves, the orientation of which can be inspected by means of the gage and method embodying the invention;
Fig. 2 is a schematical perspective view of a fuel assembly fabrication apparatus;
Fig. 3 is a side elevational view of the gage embodying the invention;
Fig. 4 is an end elevational view of the gage as seen along line 4-4 of Fig. 3;
Fig. 5 is an enlarged and elevational view, partly in section, of the gage as seen along line 5-5 of Fig. 3;
Fig. 6 is a sectional view of the gage taken along line 6-6 of Fig. 5;
Fig. 7 is an enlarged plan view, partly in section, of one of the upper grids of the fuel assembly, as seen along line 7-7 of Fig. 2;
Fig. 8 is an enlarged fragmentary plan view of the grid of Fig. 7, illustrating an expansion or bulge joint between one of the grid sleeves and the guide thimble extending therethrough;
Fig. 9 is a fragmentary side elevational view, partly in section, of the grid portion illustrated in Fig. 8, which shows the expansion joints formed between the grid sleeve and the guide thimble at locations above and below the grid; and
Fig. 10 is a view similar to Fig. 9 and showing a forward end portion of the gage inserted into the guide thimble.

In the following description, like reference characters designate like or corresponding parts throughout the several views of the drawings, and terms such as "forward", "rearward", "left", "right", "upwardly", "downwardly", and the like are used as words of convenience not to be construed as limiting terms.

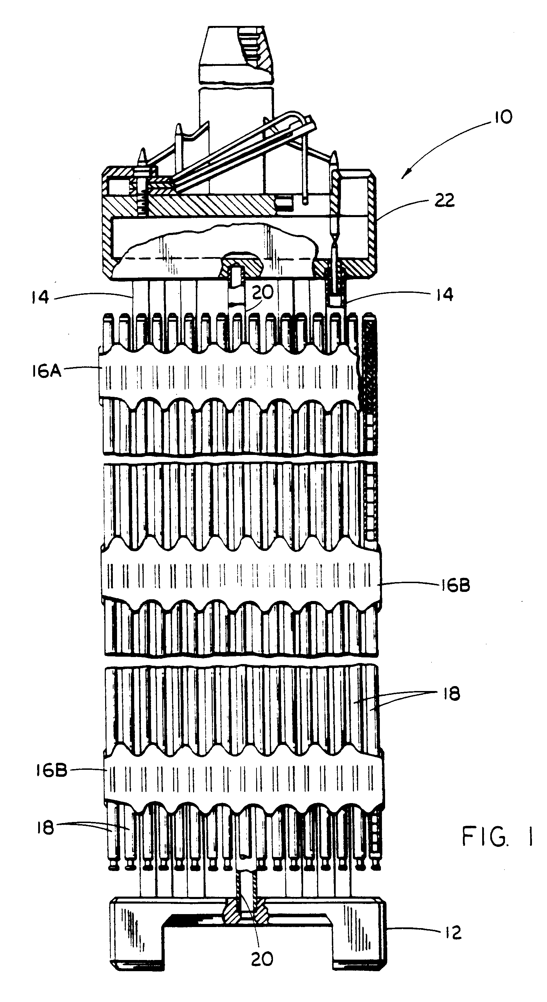

Referring now to the drawings, and particularly to Fig. 1, thereof, the fuel assembly, illustrated therein in vertically foreshortened form and generally designated with reference numeral 10 is the type used in pressurized water reactors (PWR) and includes a lower end structure or bottom nozzle 12 for supporting the fuel assembly on the lower core plate (not shown) in the core region of a reactor (not shown), control-rod guide tubes or thimbles 14 projecting upward from the bottom nozzle 12, transverse fuel-rod spacer grids 16 axially spaced along the guide thimbles 14 and attached thereto, an organized array of elongate fuel rods 18 transversely spaced and supported by the grids 16, an instrumentation tube 20 located in the center of the fuel assembly, and an upper end structure or top nozzle 22 attached to the upper ends of the guide thimbles 14.

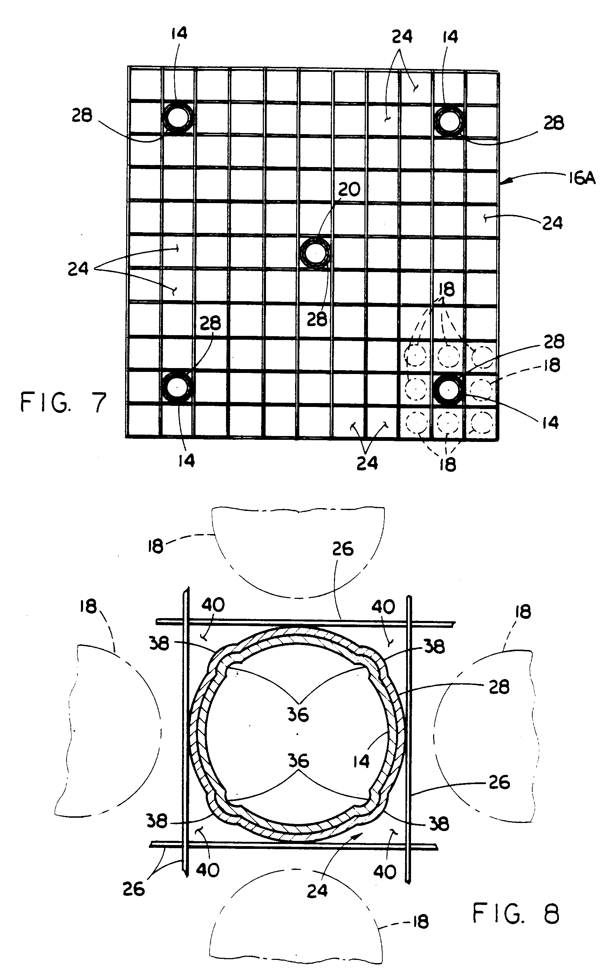

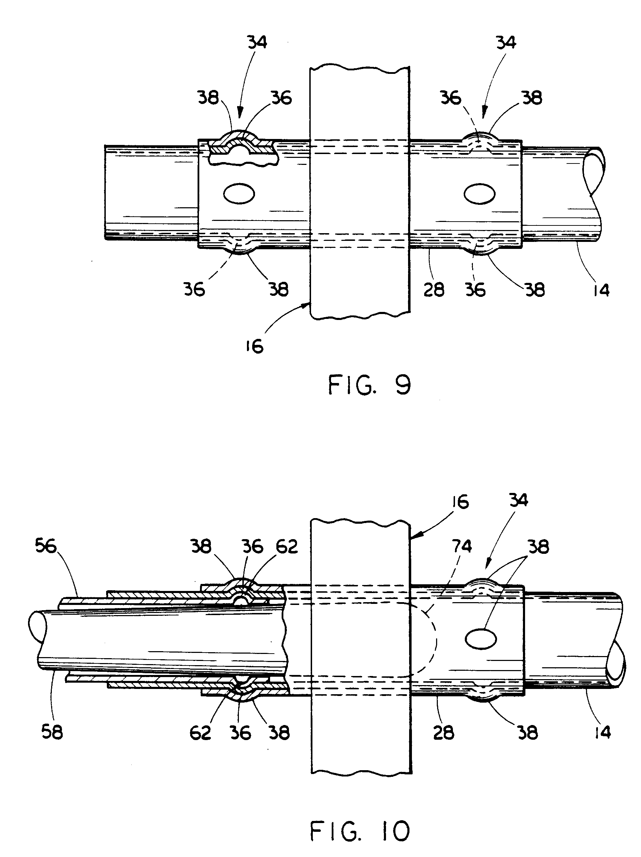

Each grid 16 is composed of straps 26 (Fig. 7) interleaved such as to define open cells 24, the various cells 24 of the axially spaced grids 16 being axially aligned with each other and adapted to receive the array of fuel rods 18 and guide thimbles 14. Each grid 16 also has short sleeves 28 disposed in the cells 24 for the guide thimbles 14, each of the sleeves 28 extending through the associated grid cell 24 and projecting from both sides of the grid. The short sleeves 28 are affixed to the grid 16, such as being welded to adjacent portions of the strap 26, and the guide thimbles 14 are attached to the respective sleeves 28, each by having concentric portions of the guide thimble 14 and grid sleeve 28 deformed or bulged out, such as by plastic expansion, to form therebetween mechanical expansion joints 34 above and below the grid 16, as seen from Figs. 8 and 9 which show each such expansion joint 34 as formed by a pair of outwardly projecting mated bulges 36, 38 formed on the concentric portions of the guide thimble 14 and the grid sleeve 28, respectively. By reason of thermal/hydraulic considerations, the two mated sets of four bulges 36, 38 per expansion joint 34 are, as shown in Fig. 8, optimally produced at 45-, 135-, 225-, and 315-degree positions, or at the 45-degree reference points, adjacent to and facing toward the corners 40 of the grid cell 24, and angular displaced about the guide thimble 14 and grid sleeve 28 relative to placement of the fuel rods 18 at 0-, 90-, 180- and 270-degree positions, or at the X-Y axes reference points about the guide thimble 14.

### Fuel Assembly Fabrication Apparatus

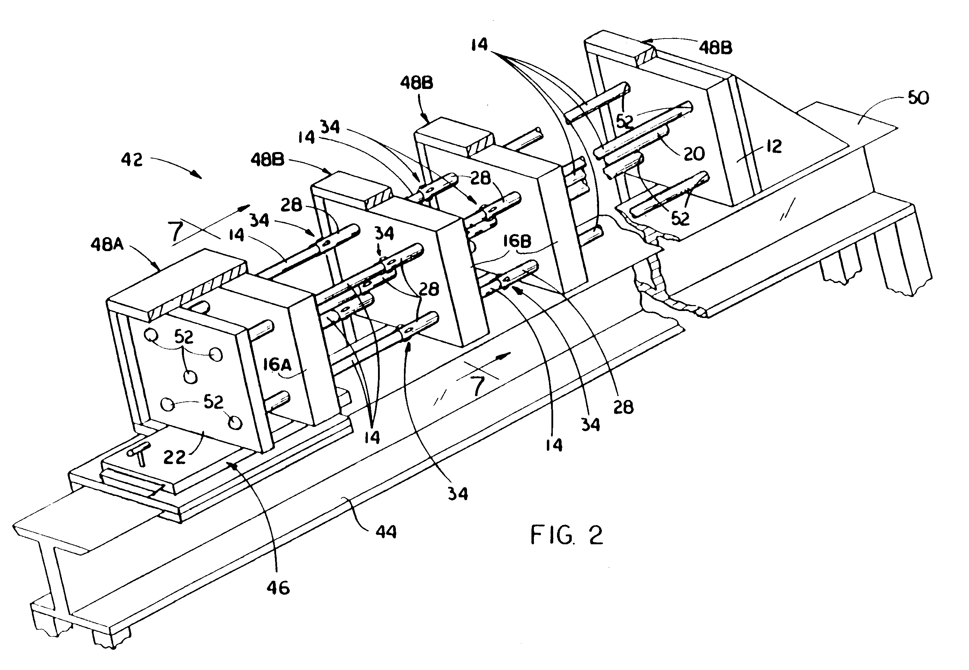

Referring now to Fig. 2, there is shown a fuel assembly fabrication apparatus of the kind described in detail in U.S. patent specification No. 4,760,637 issued August 2, 1988. This apparatus, generally designated with numeral 42 herein, comprises basically an longate stationary support fixture 44, a slide fixture 46, and a plurality of clamp structures 48. The slide fixture 46 is mounted on an end portion of the support fixture 44 for reciprocatory sliding movement therealong. The clamp structures 48 are disposed in spaced relationship with respect to one another along the stationary support fixture 44, one (48B) of them being mounted on the movable slide fixture 46 and adapted to support the top nozzle 22 and the uppermost grid 16A of the fuel assembly 10 at a preset distance from one another, and the remaining clamp structures 48B being mounted on the upper surface 50 of the stationary support fixture 44 and adapted to support the bottom nozzle 12 and the respective remaining grids 16B of the fuel assembly 10. The clamp structures 48A and 48B are adapted to support the respective nozzles and grids in parallel relationship with respect to each other and such that passageways 52 defined in the bottom and top nozzles 12,22 and the grid sleeves 28 are axially aligned so as to permit the respective guide thimbles 14 and the instrumentation tube 20 to be slidably inserted therethrough and attached to the nozzles 12,22 and the grid sleeves 28.

When using the apparatus 42 to fabricate a fuel assembly, such as the fuel assembly 10, the latter's bottom nozzle 12 and grids 16B, except the uppermost one 16A, are first installed in the respective clamp structures 48B so that the passageways 52 of the bottom nozzle 12 and the sleeves 28 of the grids 16B are in axial alignment with each other. Next, the guide thimbles 16 and the instrumentation tube 20 are inserted through the respective passageways 52 and sleeves 28, whereupon the top nozzle 22 and uppermost grid 16A are installed in the clamp structure 48A in the desired parallel spaced relationship with respect to one another, with the passageways 52 of the top nozzle 22 axially aligned with the sleeves 28 (not shown in Fig. 2) of the uppermost grid 16A, and with the guide thimbles 14 and instrumentation tube 20 extending through the sleeves of the uppermost grid 16A. Short extension sleeves (not shown) are then inserted into the passageways 52 of the top nozzle 22 so as to extend therethrough and into overlapping relationship with upper end portions of the guide thimbles 16. After all of the components have been thus installed, all of the clamp structures 48A and 48B are tightened.

Thereafter, the guide thimbles 14 and the instrumentation tube 20 are attached first to the bottom nozzle 12 by means of conventional threaded fasteners (not shown), and then to the sleeves 28 of the grids 16 by means of a suitable internal bulging tool (not shown). It should be noted that, in some fuel assemblies, the lowermost grid 16B is not actually attached to the guide thimbles 14 but rests upon spacer sleeves (not shown) surrounding portions of the guide thimbles directly above the bottom nozzle 12. Moreover, and although Fig. 9 shows two mechanical expansion joints 34, one formed above and the other below the grid 16, there may be instances where there is only one such joint 34 formed either above or below the grid 16.

### Orientation Inspection Gage and Method

As mentioned initially herein, the conventional manner of providing the bulges 36, 38 of the extension joints 34 at each grid location is to form the bulges 36, 38 at the same orientation from one grid to the next. Thus, only the expansion joints 34 at the uppermost grid 16A need to be inspected in order to determine whether the bulges 36, 38 are located within the allowed deviation range from the desired 45-degree reference points shown in Fig. 8.

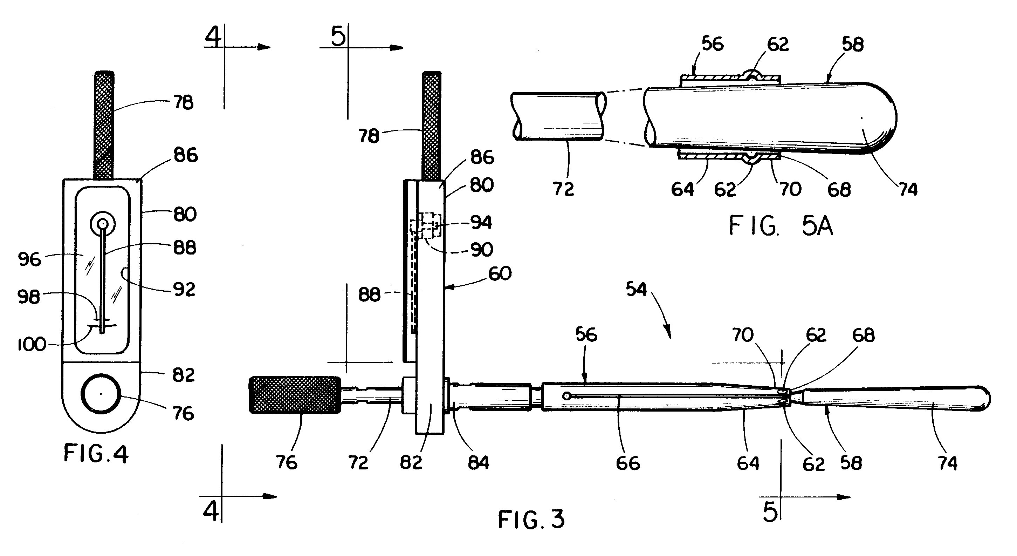

Figs. 3-6 illustrate a gage for use in performing this kind of inspection of fuel assemblies in a more objective and positive way than done conventionally. This gage, generally designated with numeral 54, comprises basically a radially expandable tubular member 56, an elongate expansion member 58, and an indicator mechanism 60.

The tubular member 56 of the gage 54 is insertable into one guide thimble 14 at a time, and it has externally formed thereon dimples or embossments 62 which are spaced from each other circumferentially about the tubular member 56. The embossments 62 preferably are the same in number (four, in the embodiment shown) as the bulges 36 of the guide thimble 14, and they are shaped so as to fit into the concavities defined on the inside of the bulges 36. The tubular member 56 includes elongate, resiliently deflectable fingers 64 which are defined by and between circumferentially spaced-apart slots 66 extending longitudinally from the distal end 68 of the tubular member, and each of which fingers 64 has one of the embossments 62 formed on a forward end portion 70 adjacent the distal end thereof.

The expansion member 58 of the gage 54 comprises an elongate shaft 72 which extends axially through the tubular member 56 and rotatably supports it. The elongate shaft 72 has a rearwardly tapered mandrel 74 affixed to the forward or distal end thereof, and has affixed to the opposite or rear end thereof means in the form of a handle 76 for slidably moving the shaft 72, together with the mandrel 74, relative to the tubular member 56 which, as seen from Fig. 3, can slide on the shaft 72 between the tapered mandrel 74 and the handle 76.

Thus, it is apparent that the expansion member 58, the shaft 72 of which slidably and rotatably supports the tubular member 56, can also be moved by means of the handle 76 axially relative to the tubular member 56 even after the latter has been inserted into a guide thimble 14. Specifically, the expansion member 58 can be moved relative to the tubular member 56 between a first position shown in Fig. 3, and a second position shown in Fig. 10. In its first position (Fig. 3), the mandrel 74 is withdrawn forward from the distal end 68 of the tubular member 56, thereby enabling the latter, due to the resilience of the metal from which it is made, to contract at the forward end portions 70 of its fingers 64 to an extent placing the embossments 62 thereon at radii insufficient for the embossments 62 to mate with the concavities on the inside of the respective guide-thimble bulges 36. Movement of the expansion member 58 from the first position thereof to its second position (Fig. 10) will cause the mandral 74 to be drawn partially into the tubular member 56, thereby forcing the end portions 70 of the fingers 64 thereof to resiliently undergo radial expansion so as to place the embossments 62 thereon at radii sufficient for them to mate with, i.e. to engage in, the inside concavities of the respective guide-thimble bulges 36.

A handle 78 is provided for rotating the tubular member 56 relative to the expansion member 58 so as to bring the embossments 62 on the forward end portions 70 of its fingers 64 into alignment with the inside concavities of the guide-thimble bulges 36 while at the same time, enough pull is exerted on the handle 76 of the expansion member 58 to urge the resilient fingers 64 together with the embossment thereon radially outward.

The indicator mechanism 60 of the gage 54 comprises an elongate indicator base 80 which has an end portion 82 thereof secured to a rear end portion 84 of the tubular member 56 and extends from the latter radially outward, the handle 78 being attached to the indicator base 80 at the outer end thereof.

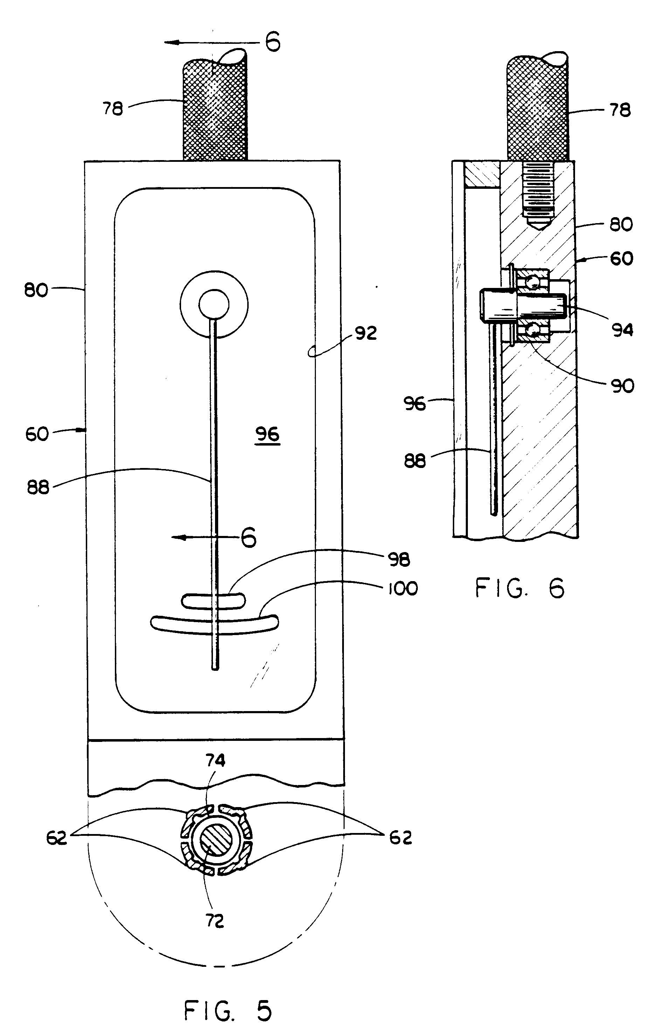

As seen best from Figs. 5 and 6, the indicator mechanism 60 includes further a needle-like pointer element 88 pivotally supported from a portion of the indicator base 80 adjacent the outer or distal end 86 thereof by means of a low-friction bearing 90 enabling the pointer element 88 to pivot freely, in the fashion of a plumb bob or pendulum-like, relative to the indicator base 80 about an axis parallel to the longitudinal axis of tubular member 56. The pointer element 88 is housed in a recess 92 formed in the front face of the indicator base 80, and it has, adjacent one end thereof, a trunnion 94 which is journalled in the bearing 90 mounted in the indicator base 80. The recess 92 is covered with a transparent plate 96 provided with a scale for indicating angular displacement or deviation of the indicator base 80 from the reference position indicated by the pointer element 88. In the preferred embodiment illustrated, the scale comprises two arcuate scale bars in the form of slots 98 and 100 which are substantially concentric with respect to each other and to the pivot axis of the pointer element 88, and are centered with respect to a zero-displacement position coinciding with said reference position which, in the illustrated embodiment, in turn coincides with a radial extending from the longitudinal axis of the tubular member 56 through the pivot axis of the pointer element 88. The arcuate slots 98 and 100 are of different lengths, the slot 98 nearer to the pivot axis of the pointer element being shorter and representing a 6-degree angular displacement or deviation in either direction from said reference position, and the longer slot 100 which is more distant from the pivot axis of the pointer element representing an 11-degree displacement or deviation in either direction from said reference position.

The gage 54 can be utilized in the following manner to determine the orientation of the mated bulges 36,38 at a given expansion joint 34 between a grid sleeve 28 and the guide thimble 14 extending therethrough. With the fuel assembly in a prone position and the gage 54 held so that the indicator mechanism 60 on the tubular member 58 is substantially upright, the tubular member is initially inserted into the guide thimble 14 to an extent substantially aligning the embossments 62 adjacent its distal end 68 with the expansion joint 34 to be inspected. Then, the expansion member 58 is axially moved, preferably incrementally, from its first position toward its second position relative to the tubular member 56 (i.e. it is pulled inwards of the expandable end portion of the latter) as, concurrently therewith, the tubular member 56 is rotated, preferably likewise incrementally, until the embossments 62 engage in the concavities defined by the bulges 36 of the guide thimble 14 on the inside thereof, whereupon further rotation of the tubular member 56 is arrested. During this rotational movement of the tubular member 56 together with the indicator mechanism 60 thereon, the scale 98,100 on the indicator base 80 is displaced from the reference position indicated by the pointer element 88, and the extent and the direction of this displacement, as indicated by the indicator mechanism, provide an indication of the orientation of the guide-thimble bulges 36 relative to their desired or ideal 45-degree reference points mentioned earlier herein, i.e., it provides an indication of the true orientation of the mated bulges 36,38.

## Claims

1. A gage (54) for inspecting a nuclear fuel assembly to determine the actual orientation of a plurality of outwardly projecting bulges (36,38) formed on, and mated to form a joint (34) between, a hollow grid sleeve (28) and a tubular guide thimble (14) extending therethrough, characterized by the combination comprising:-
(a) a tubular member (56) which is insertable into the guide thimble and has a resiliently expandable portion with outwardly projecting embossments (62) disposed thereon and spaced from each other circumferentially thereabout, said embossments being spaced apart the same as the bulges (36) on the guide thimble (14) and having a configuration enabling engagement thereof with concavities defined by the bulges (36) of the guide thimble on the inside thereof;
(b) an elongate expansion member (58) extending through said tubular member (56) and axially movable relative thereto between a first position and a second position, said expansion member, upon movement thereof from said first position to said second position, effecting resilient expansion of said expandable portion of the tubular member and consequential displacement of said embossments toward engagement with said concavities, and, upon movement from said second position to said first position, enabling contraction of said expandable portion and consequential displacement of the embossments away from said concavities;
(c) means (78) for rotating said tubular member (56) about its longitudinal axis so as to align the embossments (62) thereon with said concavities for engagement therewith, said embossments, when engaged with said concavities, preventing further rotation of the tubular member; and
(d) an indicator mechanism (60) responsive to rotation of said tubular member (58) for indicating the extent and direction of said rotation away from a reference position, and thereby indicating the actual orientation of the mated bulges (36,38).

2. A gage according to claim 1, characterized in that said expandable portion of the tubular member (56) comprises resiliently deflectable, longitudinal fingers (64) each having one of said embossments (62) disposed thereon.

3. A gage according to claim 1 or 2, characterized in that said expansion member (58) comprises an elongate shaft (72) extending through said tubular member (56) and axially movable relative thereto, and a tapered expansion mandrel (74) which extends from one end of said shaft (72) and acts upon said resiliently expandable portion of the tubular member to effect expansion thereof upon movement of the expansion member toward said second position.

4. A gage according to claim 3, characterized in that said expansion member (58) includes a handle means (76) for axially moving the expansion member (58), said handle means (76) extending from the opposite end of said shaft (72).

5. A gage according to claim 1, 2, 3 or 4, characterized in that said indicator mechanism (60) comprises an indicator base (80) connected to said tubular member (56) for rotation together therewith and including an indicator scale (98,100), and an elongate pointer element (88) pivotally supported from said indicator base (80) for, in conjunction with said scale, indicating the extent and direction of rotation of the tubular member (56) relative to said reference position.

6. A gage according to claim 5, characterized in that said indicator base (80) is mounted on the tubular member (56) in a manner such as to be in an upright disposition when the gage is in use, said pointer element (88) being freely pivotable relative to the indicator base (80) and functioning in plumb-bob fashion to indicate said reference position.

7. A gage according to claim 5 or 6, characterized in that said indicator base (80) has disposed therein a low-friction bearing (90) in which said pointer element (88) is journalled.

8. A gage according to claim 5, 6 or 7, characterized in that said means (78) for rotating the tubular member (56) comprises a handle (78) fixedly attached to said indicator base (80).

9. A gage according to claim 5, 6, 7 or 8, characterized in that said pointer element (88) is housed in a recess (92) formed in a front face of the indicator base (80), said recess being covered with a transparent plate (96) including said indicator scale (98,100).

10. A gage according to claim 9, characterized in that said indicator scale (98,100) comprises at least one elongate, arcuate scale bar substantially concentric with respect to the pivot axis of said pointer element (88), and normally centered with respect to a zero-displacement position corresponding to said reference position as indicated by the pointer element.

11. A gage according to claim 10, characterized in that said or each scale bar (98,100) is an arcuate slot formed in said transparent plate (96).

12. A method of utilizing the gage claimed in any one of the preceding claims for inspecting a nuclear fuel assembly to determine the actual orientation of a plurality of outwardly projecting bulges (36,38) formed on, and mated to form a joint (34) between, a hollow grid sleeve (28) and a tubular guide thimble (14) therethrough, characterized by the following steps sequentially performed:-
(a) inserting said tubular member (56), with the expansion member (58) therein disposed in said first position, into said guide thimble to an extent placing said embossments (62) into alignment with said joint (34);
(b) urging said elongate expansion member (58) toward said second position while, simultaneously therewith, rotating the tubular member (56) until the embossments (62) engage in the concavities defined by the bulges (36) of the guide thimble (14) on the inside thereof; and
(c) taking a reading from said indicator mechanism (80) to determine the orientation of the mated bulges (36,38) at said joint (34).

## Patentansprüche

1. Lehre (54) zum Prüfen eines Kernbrennelements zur Bestimmung der tatsächlichen Orientierung einer Mehrzahl von daran nach außen vorspringend gebildeten Wülsten (36, 38), die eine Verbindung (34) zwischen einer hohlen Gitterhülse (28) und einem durch diese hindurchverlaufenden Führungsrohr (14) herstellen, gekennzeichnet durch folgende Kombination aus:
a) einem rohrförmigen Bauteil (56), das in das Führungsrohr einführbar ist und einen elastisch aufweitbaren Teil mit nach außen vorspringenden Noppen (62) aufweist, die entlang des Umfangs mit gegenseitigen Abständen angeordnet sind und die gleichen gegenseitigen Abstände haben wie die Wülste (36) auf die Führungsrohr (14) sowie eine Konfiguration haben, die ihren Eingriff mit den von den Wülsten (36) des Führungsrohrs an dessen Innenseite gebildeten konkaven Vertiefungen ermöglichen,
b) einem länglichen Aufweiteteil (58), das durch das rohrförmige Bauteil (56) hindurchverläuft und relativ dazu axial zwischen einer ersten Position und einer zweiten Position beweglich ist, wobei das Aufweiteteil bei Verschiebung aus der ersten Position in die zweite Position ein elastisches Aufweiten des aufweitbaren Teils des rohrförmigen Bauteils und eine daraus folgende Verdrängung der Noppen in Eingriff mit den konkaven Vertiefungen und bei Verschiebung aus der zweiten Position in die erste Position ein Zusammenziehen des aufweitbaren Teils und eine daraus folgende Versetzung der Noppen aus den konkaven Vertiefungen heraus ermöglicht,
c) Mitteln (78) zum Drehen des rohrförmigen Bauteils (56) um seine Längsachse, um dessen Noppen (62) bezüglich der konkaven Vertiefungen zum Eingriff in diese auszurichten, wobei die Noppen bei Eingriff in die konkaven Vertiefungen eine weitere Drehung des rohrförmigen Bauteils verhindern, und
d) einem Anzeigemechanismus (60) in Abhängigkeit von der Drehung des rohrförmigen Bauteils (58) zum Anzeigen von Ausmaß und Richtung der Drehung gegenüber einer Bezugsposition und dadurch zur Anzeige der tatsächlichen Orientierung der ineinandergreifenden Wülste (36, 38).

2. Lehre nach Anspruch 2, dadurch gekennzeichnet, daß der aufweitbare Teil des rohrförmigen Bauteils (56) elastisch auslenkbare längliche Finger (64) aufweist, die jeweils einen der Noppen (62) tragen.

3. Lehre nach Anspruch 1 oder 2, dadurch gekennzeichnet, daß das Aufweiteteil (58) einen länglichen Schaft (72), der durch das rohrförmige Bauteil (56) verläuft und relativ dazu axial beweglich ist, und einen konischen Aufweitedorn (74) aufweist, der von einem Ende des Schaftes (72) wegragt und auf den elastisch aufweitbaren Teil des rohrförmigen Bauteils wirkt, um dessen Aufweiten bei einer Verschiebung des Aufweiteteils in seine zweite Position zu bewirken.

4. Lehre nach Anspruch 3, dadurch gekennzeichnet, daß das Aufweiteteil (58) einen Griff (76) zum axialen Verschieben des Aufweiteteils (58) aufweist, der vom anderen Ende des Schaftes (72) wegragt.

5. Lehre nach Anspruch 1, 2, 3 oder 4, dadurch gekennzeichnet, daß der Anzeigemechanismus (60) einen mit dem rohrförmigen Bauteil (56) damit zusammen drehbar verbundenen Anzeigesockel (80) mit einer Anzeigeskala (98, 100) und ein längliches Zeigerelement (88) aufweist, das drehbar am Anzeigesockel (80) gehaltert ist, um in Verbindung mit der Skala Ausmaß und Richtung der Drehung des rohrförmigen Bauteils (56) relativ zu der Bezugsposition anzuzeigen.

6. Lehre nach Anspruch 5, dadurch gekennzeichnet, daß der Anzeigesockel (80) in solcher Weise an dem rohrförmigen Bauteil (56) montiert ist, daß er sich im Gebrauch der Lehre in aufrechter Position befindet, während das Zeigerelement (88) relativ zum Anzeigesockel (80) frei drehbar ist und nach Art eines Senkbleis die Bezugsposition anzeigt.

7. Lehre nach Anspruch 5 oder 6, dadurch gekennzeichnet, daß der Anzeigesockel (80) ein reibungsarmes Lager (90) zur Lagerung des Zeigerelements (88) enthält.

8. Lehre nach Anspruch 5, 6 oder 7, dadurch gekennzeichnet, daß die Mittel (78) zum Drehen des rohrförmigen Bauteils (56) einen fest am Anzeigesockel (80) angebrachten Griff (78) aufweisen.

9. Lehre nach Anspruch 5, 6, 7 oder 8, dadurch gekennzeichnet, daß das Zeigerelement (88) in einer Aussparung (92) beherbergt ist, die in einer Frontfläche des Anzeigesockels (80) gebildet und mit einer transparenten Platte (96) abgedeckt ist, welche die Anzeigeskala (98, 100) aufweist.

10. Lehre nach Anspruch 9, dadurch gekennzeichnet, daß die Anzeigeskala (98, 100) mindestens eine längliche bogenförmige Skalenleiste aufweist, die im wesentlichen konzentrisch mit Bezug auf die Drehachse des Zeigerelements (88) verläuft und im Ruhezustand mit Bezug auf eine Nullversatzposition entsprechend der genannten Bezugsposition zentriert ist, die vom Zeigerelement angezeigt wird.

11. Lehre nach Anspruch 10, dadurch gekennzeichnet, daß die oder jede Skalenleiste (98, 100) als bogenförmiger Schlitz in der transparenten Platte (96) ausgebildet ist.

12. Verfahren zur Benutzung der Lehre nach einem der vorhergehenden Ansprüche zum Prüfen eines Kernbrennelements zwecks Bestimmung der tatsächlichen Orientierung einer Anzahl von auswärts vorspringenden Wülsten (36, 38), die an einer hohlen Gitterhülse (28) und einem durch diese hindurchverlaufenden Führungsrohr (14) gebildet sind und zwecks Bildung einer Verbindung (34) zwischen der Gitterhülse und dem Führungsrohr ineinandergreifen, gekennzeichnet durch die folgenden, nacheinander ausgeführten Schritte:
a) Einführen des rohrförmigen Bauteils (56) mit dem darin in der ersten Position befindlichen Aufweiteteil (58) in das Führungsrohr in einem solchen Maße, daß die Noppen (62) mit Bezug auf die Verbindung (34) ausgerichtet werden,
b) Drängen des länglichen Aufweiteteils (58) gegen seine zweite Position, während gleichzeitig das rohrförmige Bauteil (56) gedreht wird, bis die Noppen (62) in die von den Wülsten (36) des Führungsrohrs (14) an dessen Innenseite gebildeten konkaven Vertiefungen eingreifen, und
c) Ablesen des Anzeigemechanismus (80) zur Bestimmung der Orientierung der ineinandergreifenden Wülste (36, 38) an der Verbindung (34).

## Revendications

1. Jauge (54) pour inspecter un élément de combustible nucléaire pour déterminer l'orientation effective d'une pluralité de bourrelets formés sur celui-ci (36, 38) qui sont en saillie vers l'extérieur et établissent un raccordement (34) entre un manchon creux grillagé (28) et un tube de guidage (14) s'étendant à travers ce dernier, caractérisée par la combinaison suivante :
a) une pièce tubulaire (56) qui peut être glissée dans le tube de guidage et qui présente une pièce d'élargissement élastique avec des boutons (62) en saillie vers l'extérieur qui sont disposés le long de la circonférence à distance réciproque et ont les mêmes distances réciproques que les bourrelets (36) sur le tube de guidage (14) et présentent une configuration qui permet leur engagement avec les creux concaves formés par les bourrelets (36) du tube de guidage sur le côté intérieur de celui-ci,
b) une pièce d'élargissement allongée (58) qui traverse la pièce tubulaire (56) et qui peut être déplacée dans le sens axial par rapport à la pièce tubulaire entre une première position et une deuxième position, la pièce d'élargissement permettant, lors de son déplacement de la première position dans la deuxième position, un élargissement élastique de la pièce d'élargissment de la pièce tubulaire et un déplacement consécutif des boutons pour les engager dans les creux concaves et, lors de son déplacement de la deuxième position dans la première position, une contraction de la pièce d'élargissement et un déplacement consécutif des boutons hors des creux concaves,
c) des moyens (78) pour tourner la pièce tubulaire (56) autour de son axe longitudinal pour orienter ses boutons (62) de manière à les engager dans les creux concaves, les boutons, lorsqu'ils sont engagés dans les creux concaves, empêchant une rotation ultérieure de la pièce tubulaire, et
d) un mécanisme d'affichage (60) tributaire de la rotation de la pièce tubulaire (58) pour afficher l'étendue et l'orientation de la rotation par rapport à une position repère et par conséquent pour l'affichage et l'orientation effective des bourrelets engrenés (36, 38).

2. Jauge selon la revendication 2, caractérisée en ce que la pièce d'élargissement de la pièce tubulaire (56) présente des doigts allongés, souplement déflectables (64) qui portent chacun un bouton (62).

3. Jauge selon les revendications 1 ou 2, caractérisée en ce que la pièce élargissable (58) présente une tige allongée (72) qui traverse la pièce tubulaire (56) et qui peut être déplacée par rapport à ce dernier dans le sens axial, et un mandrin d'élargissement conique (74) qui est en saillie par rapport à une extrémité de la tige (72) et agit sur la pièce d'élargissement élastique de la pièce tubulaire pour provoquer l'élargissement de celle-ci lorsque la pièce d'élargissement est déplacée dans sa deuxième position.

4. Jauge selon la revendication 3, caractérisée en ce que la pièce d'élargissement (58) présente une poignée (76) pour le déplacement axial de la pièce d'élargissement (58) qui est en saillie par rapport à l'autre extrémité de la tige (72).

5. Jauge selon les revendications 1, 2, 3 ou 4, caractérisée en ce que le mécanisme d'affichage (60) présente un socle d'affichage (80) avec une échelle d'affichage (98,100) raccordée à la pièce tubulaire (56) et pouvant tourner avec cette dernière, ainsi qu'un élément à aiguille (88) allongé qui est tenu de manière à pouvoir tourner sur le socle d'affichage (80) pour afficher en combinaison avec l'échelle l'étendue et la direction de la rotation de la pièce tubulaire (56) par rapport à la position repère.

6. Jauge selon la revendication 5, caractérisée en ce que le socle d'affichage (80) est monté sur la pièce tubulaire (56) de manière à se trouver en position verticale lorsque la jauge est utilisée alors que l'élément à aiguille (88) peut tourner librement par rapport au socle d'affichage (80) et affiche la position repère à la manière d'un fil à plomb.

7. Jauge selon les revendications 5 ou 6, caractérisée en ce que le socle d'affichage (80) comporte un roulement de faible friction (90) pour supporter l'élément à aiguille (88).

8. Jauge selon les revendications 5, 6 ou 7, caractérisée en ce que les moyens (78) pour tourner la pièce tubulaire (56) présentent une poignée (78) fermement fixée au socle d'affichage (80).

9. Jauge selon les revendications 5, 6, 7 ou 8, caractérisée en ce que l'élément à aiguille (88) est logé dans une échancrure (92) qui est formée dans la face frontale du socle d'affichage (80) et est recouverte par une plaque transparente (96) qui présente l'échelle d'affichage (98, 100).

10. Jauge selon la revendication 9, caractérisée en ce que l'échelle d'affichage (98, 100) présente au moins une barre d'échelle arquée, allongée, qui s'étend substantiellement concentriquement par rapport à l'axe de rotation de l'élément à aiguille (88) et, à l'état de repos par rapport à la position de décalage "zéro", est centrée sur ladite position repère qui est affichée par l'élément à aiguille.

11. Jauge selon la revendication 10, caractérisée en ce que la ou chaque échelle (98, 100) est formée comme fente arquée dans la plaque transparente (96).

12. Procédé pour l'utilisation de la jauge selon l'une quelconque des revendications précédentes pour l'inspection d'un élément de combustible nucléaire pour définir l'orientation effective d'un certain nombre de bourrelets en saillie vers l'extérieur (36, 38) qui sont formés sur un manchon creux grillagé (28) et un tube de guidage (14) traversant celui-ci et qui s'engrènent pour former un raccordement (34) entre le manchon grillagé et le tube de guidage, caractérisé par les étapes suivantes exécutées l'une après l'autre :
a) introduction de la pièce tubulaire (56) avec la pièce d'élargissement se trouvant en première position dans cette dernière, dans le tube de guidage dans une proportion telle que les boutons (62) sont alignés sur le raccordement (34),
b) pousser la pièce d'élargissement allongée (58) vers sa deuxième position alors que, simultanément, la pièce tubulaire (56) est tournée jusqu'à ce que les boutons (62) s'engagent dans les creux concaves formés par les bourrelets (36) du tube de guidage (14) sur le côté intérieur de celui-ci, et
c) lire le mécanisme d'affichage (80) pour déterminer l'orientation des bourrelets (36, 38) engrenés sur le raccordement (34).
